# EUROPÄISCHE PATENTSCHRIFT

(11) **EP 2 193 038 B1**
(45) Veröffentlichungstag und Bekanntmachung des Hinweises auf die Patenterteilung: **16.03.2011**
(21) Anmeldenummer: 08787157.0
(22) Anmeldetag: 13.08.2008
(51) Int. Cl.: B60C 11/03, B60C 11/12, B60C 19/00

(54) **FAHRZEUGLUFTREIFEN**
PNEUMATIC VEHICLE TYRE
PNEUMATIQUE POUR VÉHICULE

(30) Priorität: 18.09.2007 DE 102007044435
(43) Veröffentlichungstag der Anmeldung: 09.06.2010
(73) Patentinhaber: Continental Reifen Deutschland GmbH, 30165 Hannover (DE)
(72) Erfinder: SENG, Matthias, 30449 Hannover (DE); DIENSTHUBER, Franz, 30559 Hannover (DE)
(74) Vertreter: Finger, Karsten
(86) Internationale Anmeldenummer: PCT/EP2008/060606
(87) Internationale Veröffentlichungsnummer: WO 2009/037056

(56) Entgegenhaltungen:
- EP-A- 0 688 686
- EP-A- 1 564 029
- WO-A-2004/056588
- DE-A1- 19 705 156

## Beschreibung

Die Erfindung betrifft einen Fahrzeugluftreifen für Personenkraftwagen, insbesondere für den Einsatz unter winterlichen Fahrbedingungen, mit einem Laufstreifenprofil mit einer Anzahl von in Umfangsrichtung reihenartig umlaufenden Profilelementen, beispielsweise Blöcken, wobei die Profilelemente Einschnitte aufweisen, die zumindest im Wesentlichen in Profilquerrichtung orientiert sind, wobei die Gesamtanzahl der Einschnitte in den im Laufstreifenmittelbereich verlaufenden Profilelementen größer ist als die Gesamtanzahl der Einschnitte in nahe den Laufstreifenschulterbereichen verlaufenden Profilelementen, wobei die Profilelemente jeweils in sich über den Umfang wiederholenden gleichartigen Pitches verschiedener Umfangslängen angeordnet sind und in Umfangsrichtung verlaufende Reihen von Profilelementen vorhanden sind, in welchen sich die Gesamtpitchanzahl voneinander unterscheidet, wobei die Gesamtanzahl der Pitches in zumindest einer der schulterseitigen Profilelementreihen zwischen dem 1,7- und dem 3,2-Fachen größer ist als die Gesamtanzahl der Pitches in zumindest einer im Laufstreifenmittelbereich vorgesehenen Profilelementreihe.

Ein derartiger Fahrzeugluftreifen ist aus der EP-A-1 564 029 bekannt. Der Laufstreifen dieses Reifens ist derart in Profilelement- bzw. Blockreihen gegliedert, dass in den beiden schulterseitigen Profilelementreihen die Gesamtanzahl der Pitches etwa um das 2-Fache größer ist als die Gesamtanzahl der Pitches der im Laufstreifenmittelbereich vorhanden Profilelementreihen. Die WO 2004/056588 A, die DE 197 050 156 A1 und die EP-A-0 688 686 betreffen jeweils einen für den Einsatz unter winterlichen Fahrbedingungen vorgesehenen Fahrzeugluftreifen mit einem Laufstreifenprofil, welches zu Gänze oder hauptsächlich aus in Reihen angeordneten Profilblöcken besteht. Die Gesamtzahl der Pitches in den Schulterblockreihen stimmt mit jener in den weiteren Profilelementreihen überein. Durch die Anordnung und Ausgestaltung von Querrillen und von im Mittelbereich des Laufstreifens angeordneten Profilblöcken bzw. Profilelementen ist die Gesamtanzahl der Einschnitte im Laufstreifenmittelbereich größer als die Gesamtanzahl der Einschnitte in den schulterseitigen Profilelementen.

Der aus der EP-B-0 671 288 bekannte Reifen weist ein asymmetrisch gestaltetes Laufstreifenprofil auf, welches, auf das Fahrzeug bezogen, einen Laufstreifeninnen- und einen Laufstreifenaußenabschnitt aufweist. Die Trennlinie zwischen den Profilelementen im Laufstreifeninnen- und im Laufstreifenaußenabschnitt ist gegenüber dem Reifenäquator, bei montiertem Reifen betrachtet, zu der dem Fahrzeug abgewandten Außenschulter versetzt. Die Profilelemente im Laufstreifenaußen- und im Laufstreifeninnenabschnitt sind jeweils in sich über den Umfang wiederholenden, gleichartigen Pitches angeordnet, wobei die Gesamtpitchanzahl im Laufstreifenaußenabschnitt kleiner ist als im Laufstreifeninnenabschnitt, und wobei die Fahrfläche in den beiden Laufstreifenhälften zumindest im Wesentlichen gleich groß ist. Durch diese Maßnahmen soll ein für den Einsatz unter winterlichen Fahrbedingungen besonders gut geeigneter Reifen zur Verfügung gestellt werden, bei dem die Vorteile einer asymmetrischen Profilgestaltung mit unterschiedlichen Gesamtpitchanzahlen im Laufstreifeninnen- und im Laufstreifenaußenabschnitt ausgenützt werden können und gleichzeitig durch den gleichen Fahrflächenanteil in den beiden Laufstreifenhälften dem Gesamtprofil eine ausgewogene Profilsteifigkeit verliehen werden kann, die sich auf das Fahrverhalten günstig auswirkt.

Ein Reifen, bei dem die Gesamtanzahl der Einschnitte in den Profilelementen im Laufstreifenmittelbereich wesentlich größer ist als die Gesamtanzahl der Einschnitte in den Profilelementen in den Schulterbereichen ist aus der DE-A-199 57 915 bekannt. Das Laufstreifenprofil ist durch eine zentrale Umfangsnut und durch weitere Umfangsnuten und Quernuten in eine Schulterblockreihe und zwei mittlere Blockreihen gegliedert, wobei der Verlauf der Quernuten ein laufrichtungsgebundenes Profil ergibt. Die Blöcke in den mittleren Blockreihen weisen in Reifenquerrichtung eine größere Erstreckung auf als die Blöcke in den Schulterblockreihen. Sämtliche Blöcke in den mittleren Blockreihen sind im Bereich der zentralen Umfangsnut in Umfangsrichtung aneinander gekoppelt, wobei jeder dieser Blöcke durch eine zumindest im Wesentlichen in Umfangsrichtung verlaufende Teilungsnut in zwei im Wesentlichen gleich große und ebenfalls aneinander gekoppelte Blockteile gegliedert ist. Durch diese Maßnahmen wird das Profil im Mittelbereich versteift, wodurch das Fahrverhalten optimiert werden kann.

Es ist bekannt, dass es bei PKW-Reifen, die für den Einsatz unter winterlichen Fahrbedingungen vorgesehen sind, von Vorteil für die Fahreigenschaften auf Schnee ist, wenn das Laufstreifenprofil aus Blockreihen mit einer relativ hohen Gesamtblockanzahl über den Reifenumfang versehen ist und die Anzahl der Einschnitte pro Block relativ gering ist. Der Nachteil derart ausgelegter Laufstreifen besteht in einer Verschlechterung der Eigenschaften des Reifens auf eisigem Untergrund. Für den Eisgriff und das Fahrverhalten des Reifens auf eisigem Untergrund ist es hingegen von Vorteil, wenn der Laufstreifen derart ausgelegt ist, dass er eine relativ geringe Anzahl von Blöcken in den Blockreihen aufweist, die aber zugleich eine große Zahl von Einschnitten aufweisen sollen. Reifen mit solchen Laufstreifen weisen jedoch relativ schlechte Fahreigenschaften auf schneeigem Untergrund auf.

Der Erfindung liegt die Aufgabe zugrunde, einen Reifen der eingangs genannten Art derart auszuführen, dass eine gleichzeitige Verbesserung der Fahreigenschaften auf schneeigem und auf eisigem Untergrund möglich ist.

Gelöst wird die gestellte Aufgabe erfindungsgemäß dadurch, dass die Gesamtanzahl der Pitches in der schulterseitigen Profilelementreihe, deren Gesamtpitchanzahl größer ist als jene in zumindest einer Profilelementreihe im Laufstreifenmittelbereich, mindestens 80, insbesondere mindestens 100, beträgt.

Es hat sich herausgestellt, dass Laufstreifenprofile mit einer großen Anzahl von Pitches im Schulterbereich und einer deutlich geringeren Anzahl von Pitches im Mittelbereich des

Laufstreifens in Kombination mit einer großen Anzahl von Einschnitten im Mittelbereich und einer geringen Anzahl von Einschnitten in den Schulterbereichen eine Verbesserung der Fahreigenschaften und besonders ausgewogene Fahreigenschaften auf schneeigem und auch auf eisigem Untergrund bewirken.

Gemäß einer bevorzugten Ausführungsform der Erfindung beträgt die Gesamtanzahl der Pitches in zumindest einer der schulterseitigen Profilelementreihen das 2-Fache der Gesamtanzahl der Pitches in zumindest einer Reihe von Profilelementen im Laufstreifenmittelbereich. Diese Maßnahme ist für eine optimale Auslegung des Laufstreifenprofils von Vorteil.

Eine weitere, zur gleichzeitigen Verbesserung der Fahreigenschaften auf Schnee und auf Eis vorteilhafte Maßnahme besteht darin, dass die Profilelemente in der schulterseitigen Profilelementreihe, deren Gesamtpitchanzahl größer ist als jene in zumindest einer Profilelementreihe im Laufstreifenmittelbereich, durch Quernuten von einander getrennt sind, die unter einem Winkel von 75° bis 90° zur Umfangsrichtung verlaufen. Die mit dieser Maßnahme einhergehende relativ starke Querorientierung der Profilelemente in der schulterseitigen Profilelementreihe bewirkt eine hohe Quersteifigkeit in dieser Reihe. Auch diese Maßnahme ist günstig für die Eigenschaften des Profils auf schneeigem und eisigem Untergrund.

Nach dem erfindungsgemäßen Konzept befindet sich eine große Anzahl von Feineinschnitten im Laufstreifenmittelbereich. Die Profilelemente in der schulterseitigen Profilelementreihe, deren Gesamtpitchanzahl größer ist als jene in zumindest einer Profilelementreihe im Laufstreifenmittelbereich weisen höchstens zwei Einschnitte aufweisen, welche parallel zu den Quernuten verlaufen und in eine Umfangsnut münden.

Für die Fahreigenschaften, insbesondere für die Griff- und Bremseigenschaften des Laufstreifens auf eisigem Untergrund, ist es ferner vorteilhaft, wenn die Profilelemente im Laufstreifenmittelbereich jeweils mit einer Vielzahl von zumindest im Wesentlichen in Profilquerrichtung verlaufenden und in Umfangsnuten und/oder -rillen mündenden Einschnitten versehen sind.

Bei Fahrzeugluftreifen mit Laufstreifenprofilen, welche, auf das Fahrzeug bezogen, einen Laufstreifeninnenabschnitt und einen Laufstreifenaußenabschnitt aufweisen, ist es für die gleichzeitige Verbesserung der Fahreigenschaften auf Schnee und auf Eis vorteilhafter, wenn die schulterseitige Profilelementreihe, deren Gesamtpitchanzahl größer ist als jene in zumindest einer Profilelementreihe im Laufstreifenmittelbereich, im Laufstreifenaußenabschnitt liegt.

Das Profil kann ferner weitgehend einheitlich ausgelegt werden, indem die Profilelementreihen - abgesehen von der oder den schulterseitigen Profilelementreihe(n) mit der größeren Gesamtpitchanzahl - sämtlich eine übereinstimmende Gesamtpitchanzahl aufweisen.

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 eine Draufsicht auf einen Abschnitt einer Abwicklung eines Laufstreifens mit einer Ausführungsvariante der Erfindung und
Fig. 2 eine Draufsicht auf einen Abschnitt einer Abwicklung eines Laufstreifens mit einer weiteren Ausführungsvariante der Erfindung.

Bei den in den Figuren gezeigten Laufstreifen ist mit A - A der Reifenäquator und mit B die Breite des bodenberührenden Teils des Laufstreifens bezeichnet.

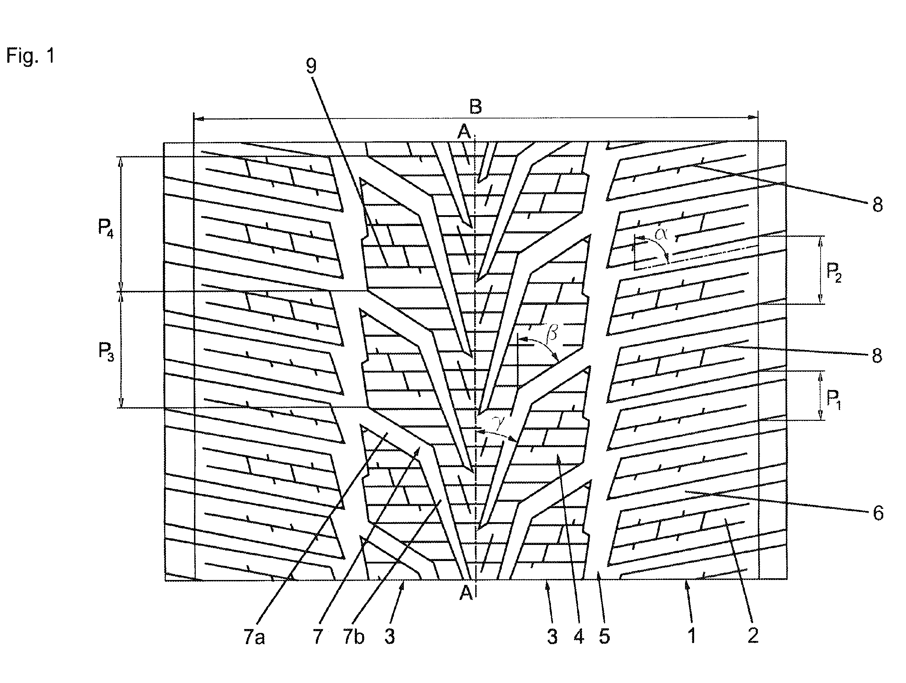

Der in Fig. 1 gezeigte Laufstreifen weist ein laufrichtungsgebunden gestaltetes Profil mit in den beiden Laufstreifenhälften übereinstimmend ausgeführten Profilstrukturen auf. Die Profilstrukturen in der einen Laufstreifenhälfte sind gegenüber jenen in der anderen Laufstreifenhälfte, wie noch beschrieben wird, in Umfangsrichtung geringfügig versetzt. Der Laufstreifen setzt sich aus Schulterblockreihen 1 mit Blöcken 2 und zwei mittleren Reihen 3 mit blockartigen Profilelementen 4 zusammen. Die Schulterblöcke 2 in den beiden Schulterblockreihen 1 sind voneinander in Umfangsrichtung durch Quernuten 6 getrennt, welche geradlinig verlaufen, sich in Richtung Laufstreifenrand jeweils geringfügig verbreitern und mit der Umfangsrichtung einen Winkel α einschleißen, welcher mindestens 75° beträgt. Die Schulterblöcke 2 weisen daher eine ausgeprägte Querorientierung, vorzugsweise mit einer geringfügigen Neigung gegenüber der Querrichtung, auf, wobei in Folge der laufrichtungsgebundenen Ausführung des Laufstreifens die Neigung in der einen Laufstreifenhälfte gegensinnig ist zu jener in der anderen Laufstreifenhälfte. Die beiden Schulterblockreihen 1 sind von den mittleren Reihen 3 durch breite Umfangsnuten 5 getrennt, welche bei der dargestellten Ausführungsvariante durch die Orientierung der sie begrenzenden Blockflanken einen insgesamt gezackten Verlauf aufweisen.

Die beiden Reihen 3 von blockartigen Profilelementen 4 im mittleren Bereich des Laufstreifens entstehen durch Rillen 7, welche jeweils aus zwei miteinander einen stumpfen Winkel einschließenden Rillenabschnitten 7a, 7b bestehen. Dabei ist die Fortsetzung jeder zweiten Quernut 6 aus den Schulterblockreihen 1 eine der Rillen 7 jenseits der Umfangsnuten 5, sodass die Anzahl der blockartigen Profilelemente 4 pro Reihe 3 die Hälfte der Anzahl der Schulterblöcke 2 einer Schulterblockreihe 1 beträgt. Die Rillenabschnitte 7a sind unter einem Winkel β zur Umfangsrichtung geneigt, welcher zwischen 50° und 75° beträgt, und gehen über eine Knickstelle in die Rillenabschnitte 7b über, welche unter einem Winkel γ zur Umfangsrichtung geneigt verlaufen, der in der Größenordnung von 5° bis 15° beträgt. Die Rillenabschnitte 7a weisen über ihre Erstreckung eine konstante Breite auf, die Rillenabschnitte 7b werden zu ihren sacknutseitigen Enden an oder nahe des Reifenäquators A -A kontinuierlich schmäler. Analog zu den Quernuten 6 sind die Rillen 7 in der einen Laufstreifenhälfte gegenüber jenen in der anderen Laufstreifenhälfte gegensinnig geneigt. Die Profilstrukturen in der einen Laufstreifenhälfte sind gegenüber jenen in der anderen Laufstreifenhälfte in Umfangsrichtung derart versetzt, dass sich die Enden der Rillenabschnitte 7b der Rillen 7 in der einen Laufstreifenhälfte zwischen den Enden der Rillenabschnitte 7b der Rillen 7 in der anderen Laufstreifenhälfte befinden.

Profilstrukturelemente, welche sich in der Umfangsrichtung des Laufstreifens gleichartig wiederholen, werden üblicherweise Pitches genannt, wobei es in Laufstreifen üblich ist, Pitches in unterschiedlichen Umfangslängen, in sogenannten Pitchlängen, vorzusehen. Die unterschiedlichen Pitchlängen entstehen beispielsweise dadurch, dass die Umfangslänge der Profilelemente bzw. -blöcke und die Breite der Quernuten und der Rillen variiert wird. Bei dem in Fig. 1 gezeigten Laufstreifenprofil sind in den Schulterblockreihen 1 und in den mittleren Reihen 3 jeweils zwei Pitches P₁, P₂ und P₃, P₄ unterschiedlicher Längen vorhanden. Die Anordnung der Pitches über den Reifenumfang wird mittels eines Rechenprogramms ermittelt und derart optimiert, dass dominierende Frequenzen im abgestrahlten Reifen-/Fahrbahngeräusch möglichst vermieden werden, wobei die Pitchfolgen des Laufstreifenprofils nicht Gegenstand der Erfindung sind.

Die Gesamtanzahl der Pitches P₁, P₂ in den Schulterblockreihen 1 beträgt in erfindungsgemäß ausgeführten PKW-Reifen, die für den Wintereinsatz vorgesehen sind, mindestens 80, bei einer Ausführung ohne Spikes vorzugsweise mindestens 100. Die Schulterblöcke 2 weisen daher eine relativ geringe Umfangslänge auf. In jedem Schulterblock 2 sind höchstens zwei Einschnitte 8 vorgesehen, in den kurzen Pitches P₁ jeweils ein Einschnitt 8, in den längeren Pitches P₂ jeweils zwei Einschnitte 8. Die Einschnitte 8 verlaufen parallel zu den Quernuten 6 über die Erstreckung der Schulterblöcke 2 und münden in die breite Umfangsnut 5. Sie sind bei der dargestellten Ausführungsform als geradlinig verlaufende Einschnitte 8 ausgeführt.

In den blockartigen Profilelementen 4 in den mittleren Reihen 3 sind in der Querrichtung bzw. nahezu in der Querrichtung des Profils und geradlinig verlaufende Einschnitte 9 vorgesehen, welche die blockartigen Profilelemente 4 durchqueren, wobei auch über den Reifenäquator A - A verlaufende Einschnitte 9 vorgesehen sind, sodass der mittlere Teil des Laufstreifens auf gleichmäßige Weise von Einschnitten 9 durchzogen ist. Die Einschnitte 9 sind unter gleichgroßen gegenseitigen Abständen angeordnet, wobei pro blockartigem Profilelement 4 zumindest sechs Einschnitte 9 verlaufen.

Sämtliche Einschnitte 8, 9 weisen eine Breite von 0,3 mm bis 0,8 mm, insbesondere von etwa 0,4 mm, und eine Tiefe von mindestens 2 mm auf, wobei sie vorzugsweise zumindest abschnittsweise bis auf Profiltiefe reichen.

Bei einem erfindungsgemäß ausgeführten Laufstreifen beträgt die Anzahl der Pitches P₁, P₂ in den schulterseitigen Profilstrukturen über den Reifenumfang das 1,7 bis 3,2 - Fache der Anzahl der Pitches P₃, P₄ der Profilstrukturen im Mittelbereich. In den schulterseitigen Profilstrukturen, hier den Schulterblöcken, ist die Gesamtanzahl der Einschnitte 8 über dem Reifenumfang wesentlich geringer als die Gesamtanzahl der Einschnitte 9 im Mittelbereich des Laufstreifens. Über den Laufstreifenumfang betrachtet beträgt die Gesamtanzahl der Einschnitte 9 das 3- bis 6-fache der Gesamtanzahl der Einschnitte 8 in den Schulterblockreihen 1.

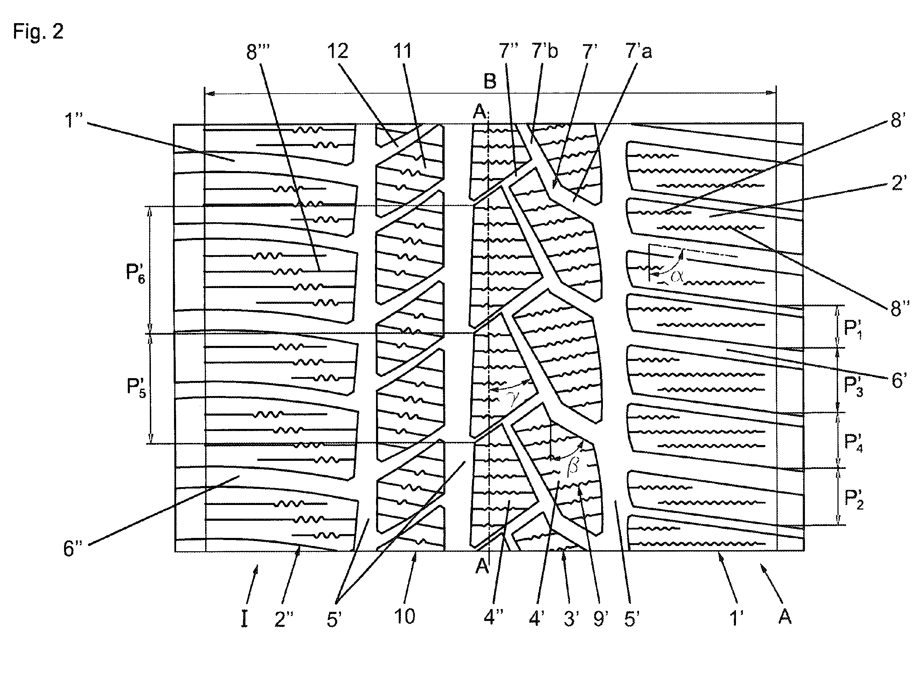

Die in Fig. 2 gezeigte Ausführungsvariante eines Laufstreifenprofils ist ebenfalls laufrichtungsgebunden ausgeführt, aber zugleich derart asymmetrisch gestaltet, dass ein Reifen mit diesem Laufstreifenprofil eine definierte Außenseite A und eine definierte Innenseite I aufweist. An der Außenseite A befindet sich eine Schulterblockreihe 1', die, analog zu den Schulterblockreihen 1 der ersten Ausführungsform, aus Blöcken 2' und Quernuten 6' besteht, die in Pitches P₁' bis P₄' unterschiedlicher Umfangslängen eingeteilt sind, deren Gesamtanzahl über den Reifenumfang mindestens 80 beträgt. Die gerade verlaufenden Quernuten 6' schließen mit der Umfangsrichtung den erwähnten Winkel α von mindestens 75° ein. Die zweite Schulterblockreihe 1", welche aus Blöcken 2" und Quernuten 6" besteht, sowie die zwischen den Schulterblockreihen 1' und 1" verlaufenden Profilelemente, eine weitere Blockreihe 10 aus Blöcken 11 und Quernuten 12 sowie eine Reihe 3' aus Doppelblöcken 4', 4", sind in einem Pitchkonzept mit zwei unterschiedlich langen Pitches P₅', P₆' angeordnet. Die Gesamtanzahl der Pitches P₁' bis P₄' über den Reifenumfang beträgt zwischen dem 1,7 und dem 3,2-Fachen der Gesamtanzahl der Pitches P₅', P₆'. Die Schulterblockreihe 1" ist durch eine Umfangsnut 5' von der mittleren Blockreihe 10 getrennt, die in der gleichen Laufstreifenhälfte verläuft wie die Schulterblockreihe 1". Weitere breite Umfangsnuten 5' trennen die Blockreihe 10 von der Doppelblockreihe 3' und diese von der Schulterblockreihe 1'. Die Schulterblöcke 1' sind, je nach Pitchlänge, mit einem oder zwei Einschnitten 8' versehen, die bei der gezeigten Ausführungsform zickzackförmig und in Profilquerrichtung verlaufen sowie in die Umfangsnut 5' münden. Die Einschnitte 8' können mit zumindest einem weiteren Einschnitt 8" kombiniert sein, der nicht in die Umfangsnut 5' mündet und parallel zu den Einschnitten 8' verläuft.

Die Schulterblöcke 2" in der Schulterblockreihe 1" sind durch leicht bogenförmig in Profilquerrichtung verlaufende Quernuten 6" in Umfangsrichtung voneinander getrennt. Je nach Pitchlänge befinden sich in jedem Schulterblock 2" drei oder vier Einschnitte 8"', die zueinander zumindest im Wesentlichen gleich beabstandet sind, in Querrichtung verlaufen und zickzackförmige Abschnitte in Kombination mit geradlinig verlaufenden Abschnitten aufweisen. Zumindest einer der Einschnitte 8'" in jedem Schulterblock 2" mündet in die benachbarte Umfangsnut 5'. Die in der Doppelblockreihe 3' vorgesehenen Blöcke 4', 4" sind in Quer- und in Umfangrichtung durch Rillen 7', 7" getrennt. Die Rillen 7" sind bei der gezeigten Ausführungsform gerade verlaufende Rillen, deren Orientierung mit der Orientierung der Quernuten 12 übereinstimmt. In die Rillen 7" münden etwa mittig Abschnitte 7'b der Rillen 7', welche gegenseitig zu den Rillen 7" geneigt verlaufen und einen Winkel γ' von 20° bis 40° mit der Umfangsrichtung einschließen. Die Abschnitte 7'a schließen einen Winkel β' mit der Umfangsrichtung in der Größenordnung von 40° bis 60° ein. Durch den Verlauf der Rillen 7' ergeben sich zur Umfangsrichtung leicht schräg geneigte und langgestreckte Blöcke 4'. In den Blöcken 4', 4" ist jeweils eine Anzahl von untereinander gleich beabstandeten, zumindest im Wesentlichen in Profilquerrichtung und zickzackförmig verlaufenden Einschnitten 9' vorgesehen, welche die Blöcke 4', 4" großteils komplett durchqueren, wobei pro Block 4', 4" mindestens fünf Einschnitte 9' vorgesehen sind.

Die Gesamtanzahl der Einschnitte 9' in den Profilelementen 4', 4" im Mittelbereich ist um ein Vielfaches, insbesondere bis zum 6-Fachen, größer als die Gesamtanzahl der Einschnitte 8' in den Schulterblöcken 2' der Schulterblockreihe 1'.

Die Erfindung ist auf die dargestellten Ausführungsbeispiele nicht eingeschränkt. Es gibt insbesondere eine Vielzahl von Möglichkeiten, erfindungsgemäß ausgeführte Profile auszugestalten.

### Bezugszeichenliste

- 1: Schulterblockreihe
- 1': Schulterblockreihe
- 1": Schulterblockreihe
- 2: Block
- 2': Block
- 2": Block
- 3: Reihe
- 3': Doppelblockreihe
- 4: blockartige Profilelemente
- 4': Block
- 4": Block
- 5: Umfangsnut
- 5': Umfangsnut
- 6: Quernut
- 6': Quernut
- 6": Quernut
- 7.: Rille
- 7': Rillen
- 7": Rillen
- 7a: Rillenabsehnitt
- 7'a: Rillenabschnitt
- 7b: Rillenabschnitt
- 7'b: Rillenabschnitt
- 8: Einschnitte
- 8': Einschnitt
- 8": .Einschnitt
- 8"': Einschnitt
- 9: Einschnitte
- 9': Einschnitte
- 10: Blockreihe
- 11: Block
- 12: Quernut
- 14: Einschnitte
- α: Winkel Quernut
- β: Winkel Rillenabschnitt 7a
- β': Winkel Rillenabschnitt 7'a
- γ: Winkel Rillenabschnitt 7b
- γ': Winkel Rillenabschnitt 7'b

## Patentansprüche

1. Fahrzeugluftreifen für Personenkraftwagen, insbesondere für den Einsatz unter winterlichen Fahrbedingungen, mit einem Laufstreifenprofil mit einer Anzahl von in Umfangsrichtung reihenartig umlaufenden Profilelementen (2, 2', 2", 4, 4', 4", 11), beispielsweise Blöcken, wobei die Profilelemente (2, 2', 2", 4, 4', 4", 11) Einschnitte (8, 8', 8", 8"', 9, 9') aufweisen, die zumindest im Wesentlichen in Profilquerrichtung orientiert sind, wobei die Gesamtanzahl der Einschnitte (9, 9') in zumindest einer im Laufstreifenmittelbereich verlaufenden Profilelementreihe (4, 4', 4") größer ist als die Gesamtanzahl der Einschnitte (8, 8') in einer schulterseitigen Profilelementreihe (1, 1'), wobei sämtliche Profilelemente (2, 2', 2", 4, 4', 4") jeweils in sich über den Umfang wiederholenden gleichartigen Pitches (P₁, P₂; P₁' bis P₄'; P₃, P₄; P₅', P₆') verschiedener Umfangslängen angeordnet sind und in Umfangsrichtung verlaufende Reihen (1, 1', 3, 3') von Profilelementen ((2, 2', 2", 4, 4', 4") vorhanden sind, in welchen sich die Gesamtpitchanzahl voneinander unterscheidet, wobei die Gesamtanzahl der Pitches (P₁, P₂, P₁' bis P₄') in zumindest einer der schulterseitigen Profilelementreihen (1, 1') zwischen dem 1,7- und dem 3,2-Fachen größer ist als die Gesamtanzahl der Pitches (P₃, P₄; P₅', P₆') in zumindest einer im Laufstreifenmittelbereich vorgesehenen Profilelementreihe (3, 3'),
**dadurch gekennzeichnet**
**dass** die Gesamtanzahl der Pitches (P₁, P₂; P₁' bis P₄') in der schulterseitigen Profilelementreihe (1, 1'), deren Gesamtpitchanzahl größer ist als jene in zumindest einer Profilelementreihe (3, 3') im Laufstreifenmittelbereich, mindestens 80, insbesondere mindestens 100, beträgt.

2. Fahrzeugluftreifen nach Anspruch 1, **dadurch gekennzeichnet, dass** die Gesamtanzahl der Pitches (P₁, P₂; P₁' bis P₄') in zumindest einer der schulterseitigen Profilelementreihen (1,1') das Zweifache der Gesamtanzahl der Pitches (P₃, P₄; P₅', P₆') in zumindest einer Reihe (3, 3') von Profilelementen (4, 4', 4") im Laufstreifenmittelbereich ist.

3. Fahrzeugluftreifen nach Anspruch 1 oder 2, **dadurch gekennzeichnet, dass** die Profilelemente (2, 2') in der schulterseitigen Profilelementreihe (1, 1'), deren Gesamtpitchanzahl größer ist als jene in zumindest einer Profilelementreihe (3') im Laufstreiferumittelbereich, durch Quernuten (6, 6') voneinander getrennt sind, die unter einem Winkel (α) von 75° bis 90° zur Umfangsrichtung verlaufen.

4. Fahrzeugluftreifen nach einem der Ansprüche 1 bis 3, **dadurch gekennzeichnet, dass** die Profilelemente (2, 2') in der schulterseitigen Profilelementreihe (1, 1'), deren Gesamtpitchanzahl größer ist als jene in zumindest einer Profilelementreihe (3') im Laufstreifenmittelbereich, höchstens zwei Einschnitte (8, 8') aufweisen, welche parallel zu den Quernuten (6, 6') verlaufen und in eine Umfangsnut (5, 5') münden.

5. Fahrzeugluftreifen nach einem der Ansprüche 1 bis 4, **dadurch gekennzeichnet, dass** Profilelemente (4, 4', 4") im Laufstreifenmittelbereich jeweils mit einer Vielzahl von zumindest im Wesentlichen in Profilquerrichtung verlaufenden und in Umgangsnuten (5, 5') und/ oder Rillen (7, 7', 7") mündenden Einschnitten (9, 9') versehen sind.

6. Fahrzeugluftreifen nach einem der Ansprüche 1 bis 5, dessen Laufstreifenprofil, auf das Fahrzeug bezogen, einen Laufstreifeninnenabschnitt (I) und einen Laufstreifenaußenabschnitt (A) aufweist, **dadurch gekennzeichnet, dass** die schulterseitige Profilelementreihe (1'), deren Gesamtpitchanzahl größer ist als jene in zumindest einer Profilelementreihe (3') im Laufsteifenmittelbereich, im Laufstreifenaußenabschnitt (A) liegt.

7. Fahrzeugluftreifen nach Anspruch 6, **dadurch gekennzeichnet, dass** die Profilelementreihen - abgesehen von der oder den schulterseitigen Profilelementreihe(n) (1, 1') mit der größeren Gesamtpitchanzahl - sämtlich eine übereinstimmende Gesamtpitchanzahl aufweisen.

## Claims

1. Pneumatic vehicle tyre for passenger cars, in particular for use under winter driving conditions, with a tread strip profile with a number of profile elements (2, 2', 2" , 4, 4', 4", 11), for example blocks, running around in the circumferential direction in the manner of rows, the profile elements (2, 2', 2", 4, 4', 4", 11) having sipes (8, 8', 8", 8"', 9, 9'), which are oriented at least substantially in the transverse direction of the profile, the total number of sipes (9, 9') in at least one row of profile elements (4, 4', 4") running in the central region of the tread strip being greater than the total number of sipes (8, 8') in a row of profile elements (1, 1') at the shoulder, all the profile elements (2, 2', 2", 4, 4', 4") being respectively arranged at identical pitches (P₁, P₂; P₁' to P₄'; P₃, P₄; P₅', P₆') of various circumferential lengths that recur over the circumference and there being circumferentially running rows (1, 1', 3, 3') of profile elements (2, 2', 2", 4, 4', 4") in which the total number of pitches differs from one to the other, the total number of pitches (P₁, P₂, P₁' to P₄') in at least one of the rows of profile elements (1, 1') at the shoulder(s) being between 1.7 and 3.2 times greater than the total number of pitches (P₃, P₄; P₅', P₆') in at least one row of profile elements (3, 3') provided in the central region of the tread strip, **characterized**
**in that** the total number of pitches (P₁, P₂; P₁' to P₄') in the row of profile elements (1, 1') at the shoulder where the total number of pitches is greater than that in at least one row of profile elements (3, 3') in the central region of the tread strip is at least 80, in particular at least 100.

2. Pneumatic vehicle tyre according to Claim 1, **characterized in that** the total number of pitches (P₁, P₂; P₁' to P₄') in at least one of the rows of profile elements (1, 1') at the shoulder is twice the total number of pitches (P₃, P₄; P₅' to P₆') in at least one row (3, 3') of profile elements (4, 4', 4") in the central region of the tread strip.

3. Pneumatic vehicle tyre according to Claim 1 or 2, **characterized in that** the profile elements (2, 2') in the row of profile elements (1, 1') at the shoulder where the total number of pitches is greater than that in at least one row of profile elements (3') in the central region of the tread strip are separated from one another by transverse grooves (6, 6'), which run at an angle (α) to the circumferential direction of 75° to 90°.

4. Pneumatic vehicle tyre according to one of Claims 1 to 3, **characterized in that** the profile elements (2, 2') in the row of profile elements (1, 1') at the shoulder where the total number of pitches is greater than that in at least one row of profile elements (3') in the central region of the tread strip have at most two sipes (8, 8'), which run parallel to the transverse grooves (6, 6') and open out into a circumferential groove (5, 5').

5. Pneumatic vehicle tyre according to one of Claims 1 to 4, **characterized in that** profile elements (4, 4', 4") in the central region of the tread strip are respectively provided with a multiplicity of sipes (9, 9') running at least substantially in the transverse direction of the profile and opening out into circumferential grooves (5, 5') and/or channels (7, 7', 7").

6. Pneumatic vehicle tyre according to one of Claims 1 to 5, the tread strip profile of which has, with respect to the vehicle, an inner tread strip portion (I) and an outer tread strip portion (A), **characterized in that** the row of profile elements (1, 1') at the shoulder where the total number of pitches is greater than that in at least one row of profile elements (3') in the central region of the tread strip lies in the outer portion (A) of the tread strip.

7. Pneumatic vehicle tyre according to Claim 6, **characterized in that** - with the exception of the row or rows of profile elements (1, 1') at the shoulder(s) with the greater total number of pitches - the rows of profile elements all have an identical total number of pitches.

## Revendications

1. Bandage pneumatique pour roue de voiture automobile, en particulier destiné à être utilisé dans des conditions de conduite hivernale, et présentant un profil de bande de roulement doté de plusieurs éléments profilés (2, 2', 2", 4, 4', 4", 11), par exemple des blocs, qui l'entourent en rangées dans la direction périphérique, les éléments profilés (2, 2', 2", 4, 4', 4", 11) présentant des entailles (8, 8', 8", 8"', 9, 9') orientées au moins essentiellement dans la direction transversale du profil, le nombre total d'entailles (9, 9') d'au moins une rangée (4, 4', 4") d'éléments profilés qui s'étend dans la partie centrale de la bande de roulement étant supérieur au nombre total des entailles (8, 8') d'une rangée (1, 1') d'éléments profilés située côté épaulement, tous les éléments profilés (2, 2', 2", 4, 4', 4") étant disposés à des pas similaires (P₁, P₂; P₁' à P₄'; P₃, P₄; P₅', P₆') qui se répètent sur la périphérie et qui présentent différentes longueurs dans le sens de la périphérie et en rangées (1, 1', 3, 3') d'éléments profilés (2, 2', 2", 4, 4', 4") qui s'étendent dans le sens de la périphérie et dans lesquels les nombres totaux de pas diffèrent, le nombre total des pas (P₁, P₂; P₁' à P₄') d'au moins l'une des rangées (1, 1') d'éléments profilés située côté épaulement représentant de 1,7 à 3,2 fois le nombre total des pas (P₃, P₄; P₅', P₆') d'au moins une rangée (3, 3') d'éléments profilés prévue dans la partie centrale de la bande de roulement,
**caractérisé en ce que**
le nombre total des pas (P₁, P₂; P₁' à P₄') de la rangée (1, 1') d'éléments profilés située côté épaulement et dont le nombre total de pas est supérieur à celui d'au moins une rangée (3, 3') d'éléments profilés située dans la partie centrale de la bande de roulement vaut au moins 80 et en particulier au moins 100.

2. Bandage pneumatique pour roue de véhicule selon la revendication 1, **caractérisé en ce que** le nombre total des pas (P₁, P₂; P₁' à P₄') d'au moins une des rangées (1, 1') d'éléments profilés situées côté épaulement représente le double du nombre total des pas (P₃, P₄; P₅', P₆') d'au moins une rangée (3, 3') d'éléments profilés (4, 4', 4") de la partie centrale de la bande de roulement.

3. Bandage pneumatique pour roue de véhicule selon les revendications 1 ou 2, **caractérisé en ce que** les éléments profilés (2, 2') de la rangée (1, 1') d'éléments profilés située côté épaulement et dont le nombre total de pas est supérieur à celui d'au moins une rangée (3') d'éléments profilés de la partie centrale de la bande de roulement sont séparés par des rainures transversales (6, 6') qui s'étendent suivant un angle (α) de 75° à 90° par rapport à la direction périphérique.

4. Bandage pneumatique pour roue de véhicule selon l'une des revendications 1 à 3, **caractérisé en ce que** les éléments profilés (2, 2') de la rangée (1, 1') d'éléments profilés située côté épaulement et dont le nombre total de pas est supérieur à celui d'au moins une rangée (3') d'éléments profilés de la partie centrale de la bande de roulement présentent au plus deux entailles (8, 8') qui s'étendent parallèlement aux rainures transversales (6, 6') et qui débouchent dans une rainure périphérique (5, 5').

5. Bandage pneumatique pour roue de véhicule selon l'une des revendications 1 à 4, **caractérisé en ce que** les éléments profilés (4, 4', 4") de la partie centrale de la bande de roulement sont tous dotés de plusieurs entailles (9, 9') qui s'étendent au moins essentiellement dans la direction transversale du profil et qui débouchent dans des rainures périphériques (5, 5') et/ou des rigoles (7, 7', 7").

6. Bandage pneumatique pour roue de véhicule selon l'une des revendications 1 à 5, dont le profil de la bande de roulement présente par rapport au véhicule une partie intérieure (I) de bande de roulement et une partie extérieure (A) de bande de roulement, **caractérisé en ce que** la rangée (1') d'éléments profilés située côté épaulement et dont le nombre total de pas est supérieur à celui d'au moins une rangée (3') d'éléments profilés de la partie centrale de la bande de roulement est situé dans la partie extérieure (A) de la bande de roulement.

7. Bandage pneumatique pour roue de véhicule selon la revendication 6, **caractérisé en ce qu'**en dehors de la ou des séries (1, 1') d'éléments profilés situés du côté de l'épaulement et qui présentent un plus grand nombre total de pas, les rangées d'éléments profilés présentent toutes des nombres totaux de pas en correspondance mutuelle.
